# EUROPÄISCHE PATENTSCHRIFT

(11) **EP 3 326 235 B1**
(45) Veröffentlichungstag und Bekanntmachung des Hinweises auf die Patenterteilung: **10.10.2018**
(21) Anmeldenummer: 16782206.3
(22) Anmeldetag: 11.10.2016
(51) Int. Cl.: H01Q 1/12, H01Q 1/32, H01Q 15/00

(54) **LEITFÄHIG BESCHICHTETE FENSTERSCHEIBE, INSBESONDERE FÜR SCHIENENFAHRZEUGE**
CONDUCTIVELY COATED WINDOW PANE, IN PARTICULAR FOR RAIL VEHICLES
VITRE DE FENÊTRE AVEC UN REVÊTEMENT CONDUCTEUR, EN PARTICULIER POUR DES VÉHICULES FERROVIAIRES

(30) Priorität: 16.10.2015 AT 508792015
(43) Veröffentlichungstag der Anmeldung: 30.05.2018
(73) Patentinhaber: Siemens AG Österreich, 1210 Wien (AT)
(72) Erfinder: MAYER, Lukas, Walter, 1190 Wien (AT); DEMMER, Andreas, 1220 Wien (AT); MADJDI, Mehrdad, 1190 Wien (AT)
(74) Vertreter: Maier, Daniel Oliver
(86) Internationale Anmeldenummer: PCT/EP2016/074327
(87) Internationale Veröffentlichungsnummer: WO 2017/064054

(56) Entgegenhaltungen:
- WO-A1-2014/060203
- RONG-RONG XU ET AL: "Dual-Band Capacitive Loaded Frequency Selective Surfaces With Close Band Spacing", IEEE MICROWAVE AND WIRELESS COMPONENTS LETTERS, IEEE SERVICE CENTER, NEW YORK, NY, US, Bd. 18, Nr. 12, 1. Dezember 2008 (2008-12-01), Seiten 782-784, XP011238889, ISSN: 1531-1309, DOI: 10.1109/LMWC.2008.2007697
- IRFAN ULLAH ET AL: "Transmission improvement of UMTS and Wi-Fi signals through energy saving glass using FSS", WIRELESS AND MICROWAVE TECHNOLOGY CONFERENCE (WAMICON), 2011 IEEE 12TH ANNUAL, IEEE, 18. April 2011 (2011-04-18), Seiten 1-5, XP031947120, DOI: 10.1109/WAMICON.2011.5872858 ISBN: 978-1-61284-081-9

## Beschreibung

### Technisches Gebiet

Die vorliegende Erfindung betrifft eine beschichtete Fensterscheibe insbesondere für Schienenfahrzeuge, wobei die Beschichtung strukturiert und elektrisch leitfähig ausgeführt ist und eine Filtercharakteristik für Funksignale aufweist.

### Stand der Technik

In Fahrzeugen wie z.B. Schienenfahrzeugen für den Personenverkehr wird eine Verfügbarkeit von aktuellen Kommunikationsdiensten wie z.B. mobile Sprachkommunikation, mobile Datenkommunikation, etc. auf Basis von z.B. GSM, UMTS und LTE, immer stärker gefordert. Daher sind ein möglichst guter Empfangspegel und eine entsprechende Empfangsqualität auch in Fahrzeugen, insbesondere des öffentlichen Verkehrs wie z.B. Zügen, Straßenbahnen, etc. gefragt.

Ein Hindernis für einen guten Empfang stellen dabei leitfähig beschichtete Fensterscheiben in diesen Fahrzeugen dar. Die Beschichtung wird als Wärme- und Sonnenschutz eingesetzt. Allerdings werden von der Beschichtung der Fensterscheiben nicht nur die Wärmestrahlung bzw. die Sonnenstrahlen reflektiert, sondern auch andere elektromagnetische Wellen wie z.B. die elektromagnetischen Wellen für mobile Kommunikationsdienste von Funkkommunikationseinrichtungen.

Das Fahrzeug weist damit für elektromagnetische Wellen eine hohe Durchgangsdämpfung auf und wirkt wie ein Faraday'scher Käfig. Beispielsweise beträgt beim Intercity-Express oder ICE die Dämpfung rund 30 dB. Die Abschirmung beträgt somit ca. 99,9%.

Anstatt einem Verzicht auf oder einer Reduktion der Beschichtung und damit einer Reduktion bzw. eines Aufhebens der Wärme- und Sonnenschutzwirkung sind aus dem Stand der Technik wie z.B. aus http://de.wikipedia.org/wiki/Intrain-Repeater so genannte In-Train-Repeater zur Überwindung der Durchgangsdämpfung bekannt. Durch In-Train-Repeater soll eine Kommunikation zwischen einem mobilen Endgerät (z.B. Mobiltelefon, Tablet-PC, Smartphone, etc.) und einer Funkkommunikationseinrichtung, welche sich außerhalb des Fahrzeugs befindet (z.B. Mobilfunknetz, etc.), verbessert und eine möglichst störungsfreie Kommunikationsverbindung ermöglicht werden.

Ohne einen In-Train-Repeater wäre eine störungsfreie Nutzung von mobilen Kommunikationsdiensten bzw. eine störungsfreie Verbindung ohne Abbrüche nur in jenen Gebieten möglich, welche eine ausreichend hohe Feldstärke aufweisen, um die Abschirmung von Fahrzeugen wie z.B. von modernen Reisezügen zu überwinden. Dies ist üblicherweise in Ballungsgebieten und in den Bahnhöfen der Fall. Gerade im ländlichen Raum sind die Funkkommunikationseinrichtungen wie z.B. Mobilfunknetze auf Basis des GSM- oder UMTS-Standards nicht so stark bzw. dicht ausgebaut. Dadurch ist eine Versorgung bzw. entsprechende Verbindung zu Funkkommunikationseinrichtungen von Fahrzeugen oder einzelnen Wagen ohne In-Train-Repeater nicht immer gewährleistet.

Aus der Schrift DE 195 03 892 C1 oder aus der Schrift EP 2 586 610 A1 sind z.B. Fensterscheiben für den Einsatz in Fahrzeugen (z.B. Kraftzeugen, etc.) bekannt, durch welche der Empfangspegel für mobile Endgeräte (z.B. Mobiltelefone, etc.) im Innenraum eines Fahrzeugs - auch ohne Einsatz eines Repeaters - erhöht wird. Diese Fensterscheiben sind mit einer elektrisch leitenden, transparenten Schicht versehen. Die leitfähige Schicht wird z.B. mittels Bedampfens auf die Scheibe aufgebracht und strukturiert. Die Strukturierung der Schicht ist dabei so ausgeformt, dass Funksignale in bestimmten Frequenzbereichen möglichst ungehindert passieren können. Um Kommunikationsdienste, insbesondere mobile Datendienste, in Fahrzeugen wie z.B. dem ICE der Deutschen Bahn oder dem Railjet der Österreichischen Bundesbahn, etc. anbieten zu können, wird heutzutage beispielsweise in diesen Fahrzeugen ein drahtloser Internetzugang angeboten. Dazu wird z.B. das Fahrzeug bzw. der Zug mit Wireless Local Area Network- oder WLAN-Technik (WLAN-Hotspots, die über einen Server und die landseitigen Mobilfunkstationen mit dem Internet verbunden sind)ausgerüstet, sodass die mobilen Datendienste bzw. das drahtlose Internet in allen Wagons des Zuges verfügbar ist... Allerdings können Signale von Funkkommunikationseinrichtungen, die außerhalb des Fahrzeuges liegen und den selben Frequenzbereich nützen, die Kommunikationsqualität der WLAN Verbindung innerhalb des Fahrzeugs stören. Weiterhin könnten beispielsweise in einem Fahrzeug angebotene Kommunikationsdienste, welche z.B. den Fahrgästen gratis angeboten werden, auch von außerhalb des Fahrzeugs genutzt werden. Außerdem können auch Funkkommunikationseinrichtungen außerhalb des Fahrzeugs durch die Funksignale der im Fahrzeug angebrachten Funkkommunikationssysteme gestört werden.

Aus der WO 2014/060203 ist eine Fahrzeugscheibe, mit transparenter, elektrisch leitfähiger Beschichtung und niedriger Transmissionsdämpfung für elektromagnetische Strahlung im Hochfrequenzbereich bekannt. Aus R.R. Xu et al: "Dual-band capacitive loaded frequency selective surfaces with close band spacing", IEEE Microwave Wireless Components Letters., vol. 18, no. 12, pp. 782-784, Dec. 2008 (XP011238889), ist eine Kombination von zwei ringartigen Beschichtungen zur Anpassung der Filtercharakteristik bekannt.

Aus der WO 2014/166869 ist eine beschichtete Fensterscheibe bekannt, bei welcher die Beschichtung frequenzselektiv ausgeführt ist. Die Beschichtung weist dabei eine Filtercharakteristik derart auf, dass Signale bzw. Frequenzbereiche von Signalen von und zu Funkkommunikationssystemen, welche außerhalb des Fahrzeugs angeordnet sind, durchgelassen, und dass Signale bzw. Frequenzbereiche von Signalen von und zu Funkkommunikationseinrichtungen, welche innerhalb des Fahrzeugs angeordnet sind, gesperrt bzw. sehr stark abgedämpft werden. Dazu weist die Beschichtung eine Strukturierung mit Strukturelementen auf.

### Darstellung der Erfindung

Der Erfindung liegt die Aufgabe zugrunde, den Stand der Technik weiterzuentwickeln.

Die Lösung dieser Aufgabe erfolgt mit einer beschichteten Fensterscheibe gemäß Anspruch 1.

Vorteilhafte Ausgestaltungen ergeben sich aus den Unteransprüchen

### Kurzbeschreibung der Zeichnung

Die Erfindung wird anhand zweier Figuren näher erläutert. Es zeigen beispielhaft und schematisch:
Fig. 1 die Struktur der Beschichtung einer erfindungsgemäßen Fensterscheibe auf Basis eines Rechteckgitters und
Fig. 2 die Struktur der Beschichtung einer erfindungsgemäßen Fensterscheibe auf Basis eines hexagonalen Gitters

### Ausführung der Erfindung

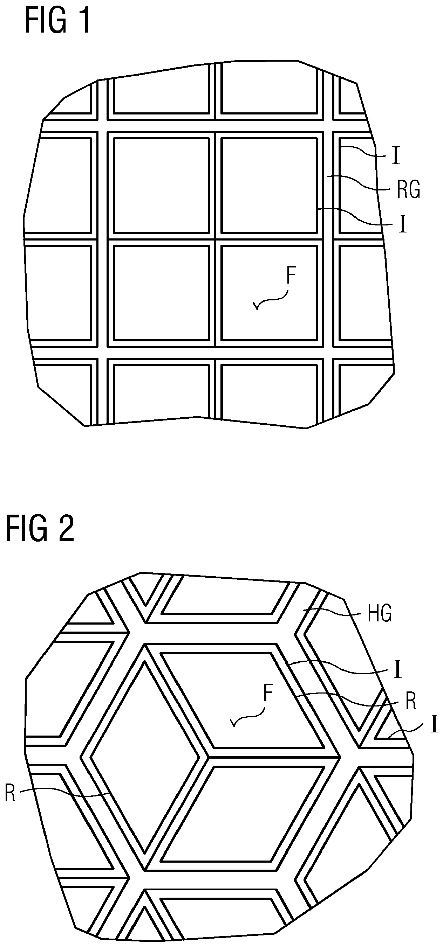

Figur 1 zeigt in schematischer Weise und beispielhaft einen Ausschnitt einer erfindungsgemäßen leitfähig beschichteten Fensterscheibe, welche vorteilhaft in Fahrzeugen wie Schienenfahrzeugen, aber auch bei Fenstern ortsfester Objekte eingesetzt werden kann. Die Fensterscheibe weist eine elektrisch leitfähige und weitestgehend transparente Beschichtung auf, welche aufgrund ihrer erfindungsgemäßen Strukturierung frequenzselektiv ist, d.h., dass sie für Funksignale eines bestimmten Frequenzbandes eine hohe Durchgängigkeit aufweist und Funksignale mit anderer Frequenz bedämpft.

Die Beschichtung erfolgt beispielsweise mit Metallen oder Metalloxiden, denkbar sind aber auch andere Materialien.

Durch die geeignete Gestaltung der Strukturierung der Beschichtung werden von der Fensterscheibe einerseits Signale von und zu Funkkommunikationseinrichtungen wie z.B. Mobilfunknetzen nach dem GSM-, UMTS oder LTE-Standard oder gegebenenfalls auch Signale von GSM-R-Netzen, DVB-T, UKW-Radiowellen oder BOS-Funksystem wie z.B. TETRA durchgelassen. Andererseits werden Signale von und zu Funkkommunikationseinrichtungen wie z.B. Wireless LAN gesperrt.

Erfindungsgemäß weist die Beschichtung die Struktur eines leitfähigen periodischen Gitters RG, HG auf, in dessen Zwischenräume jeweils zumindest zwei ringartige Beschichtungen R eingeschrieben sind, und wobei die zumindest zwei ringartigen Beschichtungen R jeweils durch eine beschichtete Fläche F ausgefüllt sind und das Gitter RG, HG, die ringartigen Beschichtungen R und die beschichtete Flächen F durch isolierende Bereiche getrennt sind.

Bei dem Ausführungsbeispiel nach Fig. 1 ist das periodische Gitter als Rechteckgitter RG aufgebaut. Jedes Rechteck weist eine quadratische Form auf und umfasst 4 ebenfalls quadratische ringartige Beschichtungen R, von denen jede eine quadratische Fläche F umschließt.

Dabei ist anzumerken, dass der Begriff Ring, oder ringartige Beschichtung R nicht nur kreisförmige Formen, sondern auch einen geschlossenen Polygonzug umfasst, der beim gegenständlichen Ausführungsbeispiel ein Quadrat umschließt, bei anderen möglichen Ausführungsformen aber beispielsweise auch die Form eines Dreiecks, Sechsecks oder einer Raute aufweisen kann.

Darüber hinaus kann ein Ring unterschiedliche Breiten aufweisen, d.h. er wird dann durch einen inneren und einen äußeren geschlossenen Polygonzug definiert, welche unterschiedliche Formen aufweisen können. Beispielsweise könnte der innere Polygonzug eines Ringes quadratisch sein, der äußere Polygonzug hingegen sechseckig usw..

Das Rechteckgitter RG, die ringartigen Beschichtungen R in Form eines geschlossenen quadratischen Polygonzuges und die beschichteten Flächen F sind durch isolierende Bereiche I voneinander getrennt. In der Figur werden die isolierenden Bereichen I durch die schwarzen Linien dargestellt, während die hellen Bereiche die Beschichtungen darstellen.

Es sind auch Strukturen denkbar, in denen innerhalb der ersten Ringe R noch weitere Ringe eingeschrieben werden. Der jeweils innerste Ring wird dann durch eine beschichtete, z.B. metallisierte Fläche F ausgefüllt.

Fig. 2 zeigt ein Ausführungsbeispiel, bei dem das periodische Gitter als hexagonales Gitter HG aufgebaut ist. Jedes Hexagon umfasst bei dem Ausführungsbeispiel 3 rautenförmige Polygonzüge als Ringe R, von denen jeder eine beispielsweise rautenförmige beschichtete, z.B. metallisierte Fläche F umschließt.

Die Geometrie für eine Struktur zu einem bestimmten Anwendungsfall mit vorgegebenen funktechnischen Eigenschaften der beschichteten Fensterscheibe, i.A. einer Frequenz-Durchlasscharakteristik, lässt sich mit dem Wissen über den verwendeten Scheibenaufbau, den Daten der Beschichtung, i.A. einem Oberflächenwiderstand und Linienbreiten, die optisch noch akzeptabel und fertigungstechnisch machbar sind, durch Feldsimulation ermitteln.

Typische Ausgangsdaten sind beispielsweise:
- Die Frequenz-Charakteristik: Durchlassbereich z.B. zwischen 700 MHz und 2.7 GHz (für LTE, GSM, und UMTS Frequenzen) mit Dämpfung geringer als 10 dB. Sperrbereich z.B. zwischen 5.2 und 5.8 GHz (für WLAN/WiFi) mit Dämpfung größer als 20 dB
- Die Winkelabhängigkeit: Die geforderte Frequenz-Charakteristik bleibt für einen Einfallswinkelbereich von -45° bis +45° über alle Raumrichtungen erhalten.
- Der Scheibenaufbau: Glasdicke der Außen- und Innengläser zwischen 3 mm und 10 mm mit einer relativen Dielektrizitätskonstante von 4 bis 8. Die Gläser können einschichtig (ESG) oder mehrschichtig (VSG) aufgebaut sein und Lagen aus Kunststoff (z.B. Folien aus PVB enthalten). Es kann anstelle von Glas auch Kunststoff zum Einsatz kommen wodurch sich die Dielektrizitätskonstante typischerweise verringert. Spaltmaß zwischen den Glaselementen ist typischerweise 8 bis 20 mm. Die Scheiben können gebogen oder plan sein.
- Die Strukturierung: Eine Strukturierung der Beschichtung mit Spaltbreiten kleiner als ca. 0.5 mm ist typisch und reduziert die optische Wahrnehmbarkeit.

Die erfindungsgemäße Struktur der Beschichtung ermöglicht gute Transmissionseigenschaften bei niedrigen Frequenzen und ein Sperrband bei hohen Frequenzen.

Je mehr Ringelemente R innerhalb der Gitterzwischenräume eingefügt werden, desto kleiner werden diese Elemente und desto höher ist die Sperrfrequenz. Das Verhältnis der hohen Sperrfrequenz und der geringen niedrigsten Durchlassfrequenz kann dabei beispielsweise mit ca. 8 gewählt werden. Dadurch kann ein Durchlassband ab 700 MHz und ein Sperrband bei 5.5 GHz erreicht werden. Relative 3dB Bandbreiten des Durchlassbereiches von über 100 % sind erzielbar.

Der Anzahl und Gestaltung der Ringelemente R innerhalb der Gitterzwischenräume kommt daher besondere Bedeutung für die Auslegung der Filtercharakteristik zu. Sie bieten die Möglichkeit die Filtercharakteristik der Fensterscheiben in besonders vorteilhafter Weise an unterschiedlichste Bedingungen anzupassen.

Um die niedrigste Durchlassfrequenz noch passieren zu lassen muss das Gitter RG, HG so groß ausgeführt sein, dass die Maschenweite etwa einem Viertel der Wellenlänge entspricht. Hier kommt jedoch nicht die freie Wellenlänge zur Anwendung, sondern die effektive Wellenlänge, die durch den Einfluss der Glaselemente reduziert ist.

Die Flächenelemente F innerhalb der Ringe R werden in ihrer Größe so gewählt, dass sie bei der Sperrfrequenz in Eigenresonanz kommen, also etwa eine halbe effektive Wellenlänge groß sind.

Es können unterschiedliche Größen und Formen der Flächenelemente F, die sich im Gitterzwischenraum befinden, gewählt werden, um eine Feinformung der Sperrcharakteristik zu erzielen.

Die Ringe (Polygonzüge) R erfüllen den Zweck der Verringerung der gegenseitigen Beeinflussung von Gitter RG, HG und Flächenelementen F. Sie verringern die Dämpfung im Durchlassbereich, welcher nach oben an die minimale Durchlassfrequenz anschließt. Erst durch die Ringe R werden die hohen relativen Bandbreiten im Durchlassbereich möglich.

Die Beschichtung der Fensterscheiben kann auch mit einer Feinstruktur versehen werden, durch welche die Eigenschaften im optischen und thermischen Bereich verändert werden. Mittels der Feinstruktur kann beispielsweise auch ein Erscheinungsbild der Fensterscheiben entsprechend gestaltet werden. Es können beispielsweise ansprechende Strukturmuster, Formen, Schriftzüge, Logos, etc. realisiert werden.

Bei einem Fahrzeug können die beschichteten Fensterscheiben über die Fahrzeugseiten verteilt angeordnet werden. Auf diese Weise werden im Rahmen der erzielten frequenzselektiven Durchlasscharakteristik die Empfangsverhältnisse sowohl für die außerhalb des Fahrzeugs angeordneten Funkkommunikationseinrichtungen als auch für die innerhalb des Fahrzeugs angeordneten Funkkommunikationseinrichtungen bewusst gestaltet.

In gleicher Weise können die erfindungsgemäßen Fensterscheiben auch in anderen Fahrzeugen (z.B. Bussen, etc.) und in Gebäuden mit beschichteten Fenstern zum Einsatz kommen.

### Bezugszeichenliste

- RG: Rechteckgitter
- HG: Hexagonalgitter
- R: ringartige Beschichtung (Polygonzüge)
- I: Isolierende Bereiche
- F: beschichtete Flächen

## Patentansprüche

1. Leitfähig beschichtete Fensterscheibe insbesondere für Schienenfahrzeuge, wobei die Beschichtung strukturiert und elektrisch leitfähig ausgeführt ist und eine Filtercharakteristik für Funksignale aufweist **dadurch gekennzeichnet, dass** die Beschichtung die Struktur eines leitfähigen periodischen Gitters (RG, HG)aufweist in dessen Zwischenräume jeweils zumindest zwei ringartige Beschichtungen (R) eingeschrieben sind, dass die zumindest zwei ringartigen Beschichtungen (R) jeweils durch eine beschichtete Fläche (F) ausgefüllt sind und dass das Gitter(RG, HG), die ringartigen Beschichtungen (R) und die beschichteten Flächen(F) durch isolierende Bereiche (I) getrennt sind.

2. Fensterscheibe nach Anspruch 1, **dadurch gekennzeichnet, dass** als Beschichtung eine Metallisierung vorgesehen ist.

3. Fensterscheibe nach Anspruch 1 oder 2, **dadurch gekennzeichnet, dass** das leitfähige periodische Gitter die Form eines Rechteckgitters (RG)aufweist.

4. Fensterscheibe nach Anspruch 1 oder 2, **dadurch gekennzeichnet, dass** das leitfähige periodische Gitter die Form eines hexagonalen Gitters (HG)aufweist.

5. Fensterscheibe nach einem der Ansprüche 1 bis 4, **dadurch gekennzeichnet, dass** die Beschichtung weiterhin mit einer Feinstruktur versehen ist.

6. Fensterscheibe nach einem der Ansprüche 1 bis 5, **dadurch gekennzeichnet, dass** als im Innerraum des Fahrzeugs angeordnete Funkkommunikationseinrichtung ein so genanntes Wireless Local Area Network oder WLAN einsetzbar ist.

7. Fensterscheibe nach einem der Ansprüche 1 bis 6, **dadurch gekennzeichnet, dass** Signale von Funkkommunikationseinrichtungen nach dem GSM, UMTS und/oder LTE Mobilfunkstandards als durchlassbare Signale vorgesehen sind.

8. Fahrzeug mit beschichteten Fensterscheiben nach einem der Ansprüche 1 bis 7, **dadurch gekennzeichnet, dass** die Fensterscheiben über beide Fahrzeuglängsseiten verteilt angeordnet sind.

9. **Fahrzeug nach Anspruch 8, dadurch gekennzeichnet, dass** das Fahrzeug als Schienenfahrzeug, insbesondere Zug oder Straßenbahn, ausgeführt ist.

## Claims

1. Conductively coated window pane, in particular for rail vehicles, wherein the coating is made in a structured and electrically conductive form, and has filtering characteristics for radio signals, **characterised in that** the coating has the structure of a conductive periodic grating (RG, HG), in the intermediate spaces of which at least two annular coatings (R) are respectively embedded, **in that** the at least two annular coatings (R) are respectively filled by a coated area (F) and **in that** the grating (RG, HG), the annular coatings (R) and the coated areas (F) are separated by insulating regions (I).

2. Window pane according to claim 1, **characterised in that** a metallisation is provided as a coating.

3. Window pane according to claim 1 or 2, **characterised in that** the conductive periodic grating has the shape of a rectangular grating (RG).

4. Window pane according to claim 1 or 2, **characterised in that** the conductive periodic grating has the shape of a hexagonal grating (HG).

5. Window pane according to one of claims 1 to 4, **characterised in that** the coating is also provided with a fine structure.

6. Window pane according to one of claims 1 to 5, **characterised in that** what is known as a Wireless Local Area Network or WLAN can be used as radio communication equipment arranged in the interior of the vehicle.

7. Window pane according to one of the claims 1 to 6, **characterised in that** signals from radio communication equipment to the GSM, UMTS and/or LTE mobile radio standards are provided as signals that are allowed to pass through.

8. Vehicle with coated window panes according to one of claims 1 to 7, **characterised in that** the window panes are arranged distributed over both longitudinal sides of the vehicle.

9. Vehicle according to claim 8, **characterised in that** the vehicle is designed as a rail vehicle, in particular a train or tram.

## Revendications

1. Vitre de fenêtre munie d'un revêtement conducteur, en particulier pour des véhicules ferroviaires, dans laquelle le revêtement est réalisé de manière structurée et électriquement conductrice et présente une caractéristique de filtrage destinée à des signaux radio, **caractérisée en ce que** le revêtement présente la structure d'une grille périodique conductrice (RG, HG) au sein des intervalles de laquelle sont intégrés respectivement au moins deux revêtements annulaires (R), les au moins deux revêtements annulaires (R) sont respectivement remplis d'une surface revêtue (F), et la grille (RG, HG), les revêtements annulaires (R) et les surfaces revêtues (F) sont séparés par des secteurs isolants (I).

2. Vitre de fenêtre selon la revendication 1, **caractérisée en ce qu'**une métallisation est prévue pour faire office de revêtement.

3. Vitre de fenêtre selon la revendication 1 ou 2, **caractérisée en ce que** la grille périodique conductrice présente la forme d'une grille rectangulaire (RG).

4. Vitre de fenêtre selon la revendication 1 ou 2, **caractérisée en ce que** la grille périodique conductrice présente la forme d'une grille hexagonale (HG).

5. Vitre de fenêtre selon l'une quelconque des revendications 1 à 4, **caractérisée en ce que** le revêtement est en outre muni d'une microstructure.

6. Vitre de fenêtre selon l'une quelconque des revendications 1 à 5, **caractérisée en ce que** ce que l'on appelle un réseau local sans fil ou WLAN peut être utilisé en tant que dispositif de communication radio agencé à l'intérieur du véhicule.

7. Vitre de fenêtre selon l'une quelconque des revendications 1 à 6, **caractérisée en ce que** les signaux des dispositifs de communication radio sont prévus pour être des signaux transmissibles selon la norme de radiocommunication mobile GSM, UMTS et/ou LTE.

8. Véhicule muni de vitres de fenêtre revêtues selon l'une quelconque des revendications 1 à 7, **caractérisé en ce que** les vitres de fenêtre sont agencées de manière répartie sur les deux côtés longitudinaux de véhicule.

9. Véhicule selon la revendication 8, **caractérisé en ce que** le véhicule est réalisé sous la forme d'un véhicule ferroviaire, en particulier d'un train ou d'un tramway.
